# EUROPEAN PATENT SPECIFICATION

(11) **EP 1 165 334 B1**
(45) Date of publication and mention of the grant of the patent: **16.04.2003**
(21) Application number: 01900539.6
(22) Date of filing: 15.01.2001
(51) Int. Cl.: B60G 21/05

(54) **VEHICLE SUSPENSION SYSTEM**
RADAUFHÄNGUNG FÜR EIN FAHRZEUG
SYSTEME DE SUSPENSION DE VEHICULE

(30) Priority: 25.01.2000 GB 0001520; 05.06.2000 GB 0013464
(43) Date of publication of application: 02.01.2002
(73) Proprietor: Walker, Peter John, Roxwell, Essex CM1 4NU (GB)
(72) Inventor: Walker, Peter John, Roxwell, Essex CM1 4NU (GB)
(74) Representative: Nash, Keith Wilfrid
(86) International application number: GB0100144
(87) International publication number: WO01054932

(56) References cited:
- EP-A- 0 319 391
- EP-A- 0 825 042
- EP-A- 0 827 851
- WO-A-98/10949
- FR-A- 2 040 840
- FR-A- 2 616 715
- US-A- 4 854 603

## Description

The present invention relates to suspension systems for vehicles.

Generally a motor vehicle incorporating independent suspension (i.e. not a solid axle) either at the front or the rear of the vehicle will have a chassis structure which includes a suspension system including left and right suspension components for left and right wheels respectively, each of which is arranged to allow a constrained up and down movement of the respective wheel relative to the chassis structure. A commonly encountered example is the well-known double wishbone suspension system.

The term chassis structure is used herewith to refer both to the chassis of a vehicle having a discrete chassis, to the corresponding load bearing part of a monocoque body (that is a vehicle body where the chassis and body are combined in one unit), and to any combination of the above, for example to the chassis component of a monocoque body with sub-frames.

With such independent suspension systems the suspension components will normally possess a geometry which enables each respective suspended wheel to compensate for roll of the chassis structure during cornering and still remain relatively perpendicular to the road surface so maintaining an optimum tyre-to-road contact patch and thereby maximum grip. In order to achieve this result the camber angle of each wheel has to change with respect to the chassis structure as the suspension is compressed or extended during cornering. (This contrasts with the requirement for a motorcycle where the tyre profile is round and the contact patch is unaffected by the angle of lean).

In use, a suspension is compressed or extended as a consequence of longitudinal weight transfer. For example, when the vehicle is subject to high acceleration there is longitudinal weight transfer directed to the rear of the vehicle thereby compressing the rear suspension and causing the rear wheels to adopt a negative camber, that is to say the rear wheels become inclined inwards. At the same time the front suspension extends causing the front wheels to adopt a positive camber. This then significantly reduces the level of contact of the tyres with the road. The converse arises when decelerating due to braking in which weight transfer goes forward and the rear suspension extends while the front suspension is compressed. In this case also the problem of compromised tyre-to-road contact arises.

The present invention is concerned with solving this problem without compromising the measures required for cornering, and in particular with ensuring maximum grip during cornering and during acceleration or deceleration and with intermediate situations involving both.

Several theoretical solutions to this problem have been devised but their commercial appeal has been tempered by a variety of attendant concerns commonly focusing on excessive complexity, cost, friction, NVH (noise/vibration/harshness), space & packaging demands and inherent roll centre, suspension travel and other design limitations.

The present invention provides a simple and commercially viable solution while affording low friction, intrinsic compactness, greater design freedom and an ability to achieve its objectives while allowing the use of rubber mounted lower suspension arms.

From French Specification No. 2,040,840 is known a motor vehicle suspension arrangement with left and right upper and lower suspension elements, wherein the upper suspension elements are linked independently of the lower suspension elements via a rocking rod.

According to the present invention there is provided a motor vehicle chassis structure which includes an independent suspension system including left and right upper and lower suspension components for left and right wheels respectively for gripping and travelling along a road surface, each of said suspension components being arranged to allow a constrained up and down movement of the respective wheel relative to the vehicle chassis structure, wherein the upper suspension component on one side of the vehicle is cross-linked independently of the lower suspension components with the upper suspension component on the other side of the vehicle, characterised in that the cross-links are each provided by a diagonal mechanical connection between an upper region of the upper suspension component on one side and a respective upper region of the upper suspension component on the other side via a connecting rod and offset pivot shaft assembly, whereby to constrain the rotational plane of each wheel towards an orientation which is normal to the road surface while allowing the chassis structure to move vertically and to roll relative to said wheels during cornering, acceleration, deceleration and combinations thereof, and an upper region of each wheel is constrained laterally so that each respective wheel is constrained in a position where it is substantially perpendicular to the road surface.

Generally with conventional tyres, this means that each wheel will be constrained in a position where it is substantially perpendicular, ie perpendicular, or within a few degrees of being perpendicular, to the road surface.

The invention applies to left and right suspension components for left and right wheels respectively either in the form of a front suspension system of a vehicle or in the form of a rear suspension system of a vehicle or in both.

With the suspension structure in accordance with the invention, a vertical movement of the wheel relative to the chassis on one side feeds a compensating change in the lateral inclination of the wheel relative to the chassis structure on the other side. Additionally, in order to provide camber compensation, a downward vertical movement of the upper suspension component on one side is translated into lateral in ware movement of the suspension component on the other side, and vice versa.

If desired, a spring unit may be mounted to act between the chassis and either the upper end of each suspension upright on which a wheel is mounted, or the related upper suspension component of the wheel suspension. In this case, preferably each point of attachment of the spring unit provides for pivoting between the end of the spring unit and the chassis at one end, and the suspension upright or top arm at the other end. The spring unit preferably extends between its two points of attachment at an angle to the vertical.

By allowing relative lateral movement between the upper suspension components and the claims structure, the invention enables the forces produced during cornering to be utilised to reduce vehicle roll and allows for the magnitude of this effect to be modified in a variety of ways, by altering leverage ratios within the system, by changing the lateral distance between the wheel centrelines and sprung arm outer pivots, and/or by mounting suspension spring units, to act at an acute angle to the vertical between the chassis and either the top arms or upper sections of the suspension uprights. This latter method would generally be detrimental to ride quality and would not normally be acceptable in a vehicle designed for road use. However, this is not usually an important consideration in the design of a vehicle for track use, where performance and cornering ability is of greater importance than comfort.

An embodiment of the invention will now be described by way of example with reference to the accompanying diagrammatic drawings in which:-
Figure 1 is an end elevation of the left and right suspension components of a dual arm (double wishbone) rear suspension system of a rear wheel driven vehicle shown in the normal ride position;
Figure 2 is the same suspension system shown with the vehicle cornering;
Figure 3 is the same suspension system shown with the suspension fully compressed;
Figure 4 is the same suspension system shown with the suspension fully extended, and
Figure 5 illustrates how a spring suspension unit can be fitted between a top arm and the chassis.

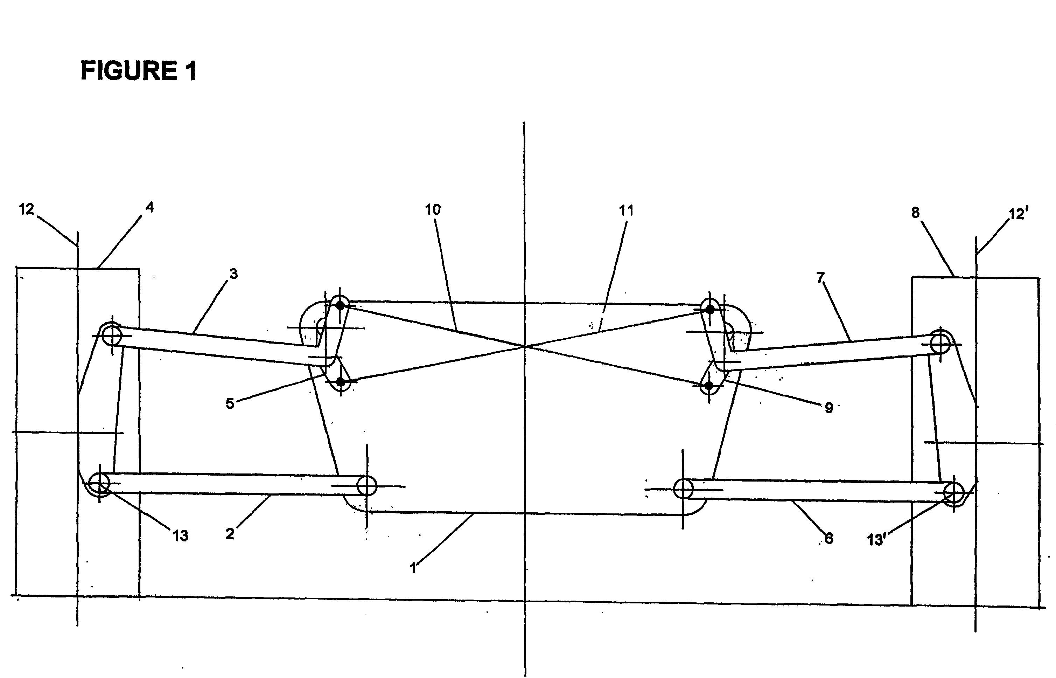

Referring to Figure 1, a diagrammatic representation of the rear view of a dual arm rear suspension system of a rear wheel driven vehicle is shown.

A chassis structure 1 is connected by a left hand bottom arm 2, and also by a left hand top arm 3, (via an offset pivot shaft assembly 5) to a wheel and tyre assembly 4.

The right hand suspension assembly is a mirror image of the left hand suspension assembly and involves a right hand bottom arm 6, a right hand top arm 7, a right hand offset pivot shaft assembly 9, and a right hand wheel and tyre assembly 8, all similarly attached to the chassis structure 1.

In accordance with the present invention the left and right upper suspension components are cross connected by connecting rod 10, linking left hand top arm 3, to right hand offset pivot shaft assembly 9, and connecting rod 11, linking right hand top arm 7, to left hand offset pivot shaft assembly 5.

The cross-connection so described constrains the plane of each wheel (ie the overall disposition of the wheel perpendicular to its axis of rotation) towards an orientation which is substantially normal to the road surface, and thereby ensures maximum tyre-to-road contact both during cornering and during acceleration and deceleration. At the same time the linkages enable the chassis structure to move vertically and to roll relative to these wheels.

The following is an example of how this is achieved.

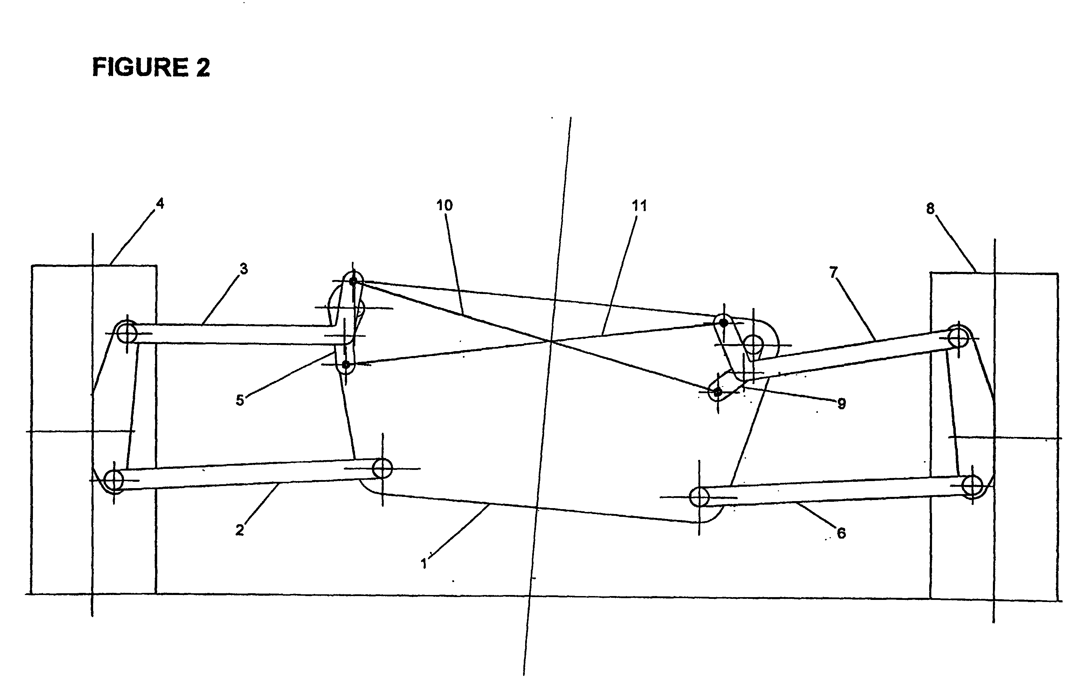

When cornering, say to the left (see Figure 2), the chassis structure 1, rolls towards the outside of the bend and the right hand suspension assembly moves up relative to the chassis structure and the left hand suspension assembly moves down relative to the chassis structure. As is normal with this type of suspension system, even without the cross-connection afforded by this invention, when the right hand top arm 7, pivots upwards, its geometry in relation to the right hand bottom arm 6, produces an increase in negative camber of the right hand wheel and tyre assembly 8, relative to the chassis structure (ie the wheel tilts inwards with respect to the chassis structure) to compensate for chassis/body roll and enable the wheel to remain substantially normal to the road surface.

With this invention, part of this required camber compensation is achieved by the action of connecting rod 10, and its offset pivot shaft assembly 9, which translates the simultaneous downward movement of the left hand top arm 3, into an inward lateral movement of the right hand top arm 7. Thus a vertical movement of the wheel on one side of the vehicle provides a compensating change in the lateral inclination of the wheel on the other side.

Similarly, and in reverse fashion, the action of connecting rod 11, and offset pivot shaft assembly 5, contribute to the increase in positive camber of the left hand wheel and tyre assembly 4, with respect to the chassis structure (ie this wheel also remains substantially normal to the road surface), again to compensate for body/chassis roll.

An additional function of the connecting rods 10 and 11, and offset pivot shaft assemblies 9 and 5, is to use the forces generated during cornering to reduce chassis/body roll.

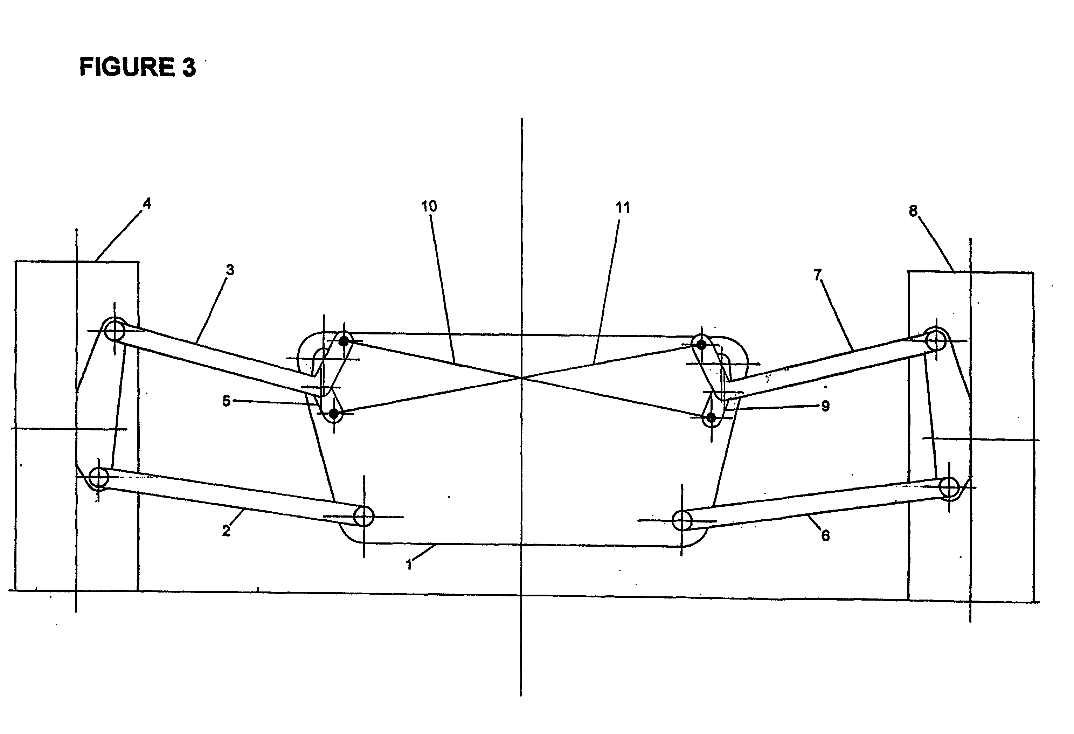

When accelerating in a straight line (see Figure 3), the effects of longitudinal weight transfer compress the suspension on both sides. In a normal dual arm suspension system of this kind this would lead to the adoption of negative camber on both wheels, (ie both wheels tilting inwards) compromising the tyre-to-road contact and therefore grip. With this invention, the upward movement of the two upper arms 3 and 7, acts via the connecting rods 10 and 11, and offset pivot shaft assemblies 9 and 5, to move the top arms laterally outwards, away from the centreline of the vehicle, thus ensuring the wheels remain substantially perpendicular to the road surface and the tyre-to-road contact patches remain at an optimum for tractive grip. Again it will be seen that a vertical movement of the wheel and tyre assembly relative to the chassis structure on one side of the vehicle provides a compensating change in the lateral inclination of the wheel on the other side.

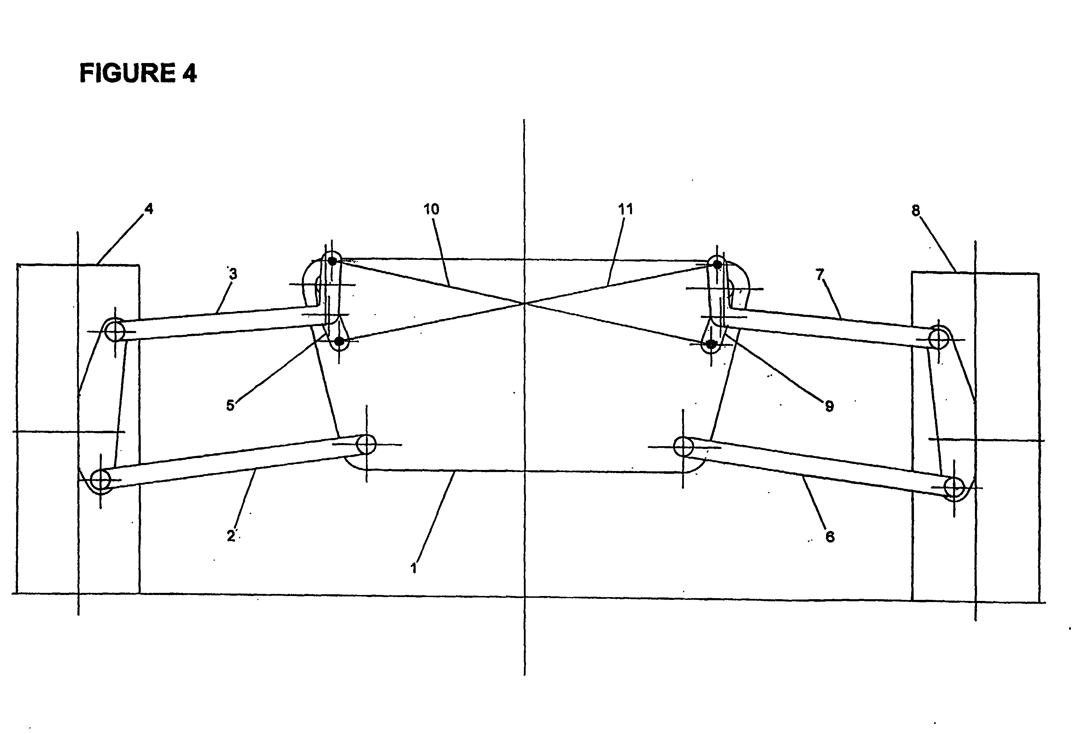

Similarly, when decelerating in a straight line (see Figure 4), the effects of longitudinal weight transfer extend the suspension on both sides, which in a normal dual arm suspension system of this kind would lead to the adoption of unwanted positive camber. In this instance also, the action of the two connecting rods 10 and 11, and offset pivot shaft assemblies 9 and 5, act to move the two top arms 7 and 3, in compensation for this effect, this time by moving the two top arms laterally inwards. Thus again the wheels are held substantially perpendicular to the road surface and the tyre-to-road contact remains at the optimum for maximum braking grip.

In the embodiment of the invention shown in Figure 1, suspension spring units (not shown) will normally act between the chassis structure 1 and each of the bottom arms 2 and 6, so avoiding interaction between suspension spring loadings and the cross-linked upper suspension components. With suspension spring units so mounted, the inherent abililty of this embodiment to affect the degree of vehicle roll when cornering, can be modified by altering the leverage ratios within the system and/or the lateral distance between the wheel centrelines 12 (12') and the sprung arm outer pivots 13 (13').

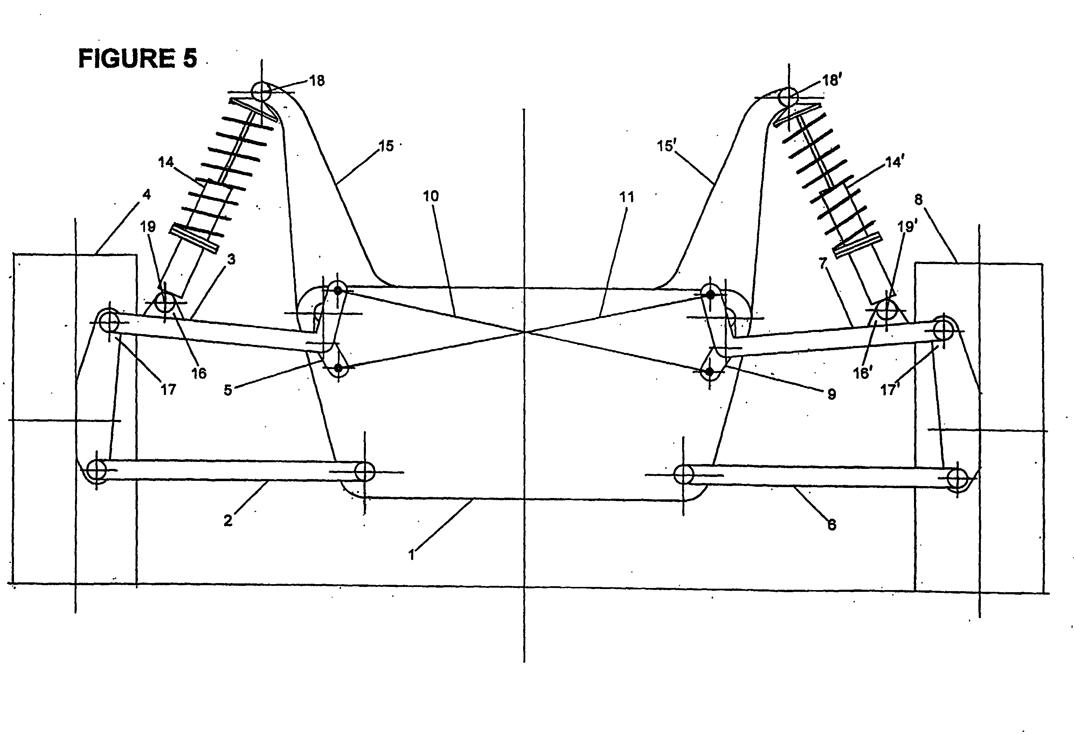

Figure 5 shows a modification of the last mentioned arrangement. Here the system's ability to affect vehicle roll can be modified by pivotally mounting suspension spring units 14, (14') at opposite ends 18, 19 (18', 19') between upper support brackets 15, (15') attached to the chassis, and either lower support brackets 16, (16') attached to the top arms 3 (7), or the upper part of suspension uprights 17, (17'). The ability of the arrangement to affect the degree of roll can then be modified by altering the angle of inclination to the vertical of the suspension spring units 14, (14').

## Claims

1. A motor vehicle chassis structure which includes an independent suspension system including left and right upper and lower suspension components (3, 7, 2, 6) for left and right wheels (4, 8) respectively for gripping and travelling along a road surface, each of said suspension components being arranged to allow a constrained up and down movement of the respective wheel relative to the vehicle chassis structure, wherein the upper suspension component (3) on one side of the vehicle is cross-linked independently of the lower suspension components (2, 6) with the upper suspension component (7) on the other side of the vehicle, **characterised in that** the cross-links are each provided by a diagonal mechanical connection between an upper region of the upper suspension component (3) on one side and a respective upper region of the upper suspension component (7) on the other side via a connecting rod (10, 11) and offset pivot shaft assembly (5, 9), whereby to constrain the rotational plane of each wheel towards an orientation which is normal to the road surface while allowing the chassis structure to move vertically and to roll relative to said wheels during cornering, acceleration, deceleration and combinations thereof, and an upper region of each wheel is constrained laterally so that each respective wheel is constrained in a position where it is substantially perpendicular to the road surface.

2. A motor vehicle chassis structure according to claim 1 wherein a spring unit (14, 14') is mounted to act between the chassis and either the upper end of each suspension upright (17, 17') on which a wheel is mounted, or the related upper suspension component (3, 7) of the wheel suspension.

3. A motor vehicle chassis structure according to claim 2 wherein each point of attachment of the spring unit provides for pivoting between the end of the spring unit and the chassis at one end, and the suspension upright or top arm, at the other.

4. A motor vehicle chassis structure according to claim 2 or 3 wherein the spring unit extends between its two points of attachment at an acute angle to the vertical.

5. A motor vehicle chassis structure according to claim 1 wherein the inherent ability of the arrangement to affect the degree of vehicle roll when cornering is controllable by altering the leverage ratios within the system and/or the lateral distance between the wheel centrelines and the sprung arm outer pivots.

6. A motor vehicle chassis structure according to either of claims 3 or 4 wherein the ability of the arrangement to affect the degree of roll is controllable by altering the angle of inclination to the vertical of the lines of thrust of the spring units.

7. A method of adjusting the degree of roll when cornering of a vehicle incorporating a chassis structure as claimed in claim 1 comprising the step of altering the leverage ratios within the system and/or the lateral distance between the wheel centrelines and the sprung arm outer pivots.

8. A method of adjusting the degree of roll when cornering of a vehicle incorporating a chassis structure as claimed in either of claims 3 or 4 comprising the step of altering the angle of inclination to the vertical of the lines of thrust of the spring units.

## Patentansprüche

1. Motorfahrzeug-Fahrgestell, das ein unabhängiges Aufhängungssystem aufweist, welches linke und rechte obere und untere Aufhängungskomponenten (3, 7, 2, 6) für linke und rechte Räder (4, 8) zur Bodenhaftung und zur Fahrt auf einer Straßenoberfläche besitzt, wobei jede der Aufhängungskomponenten so angeordnet ist, daß sie eine begrenzte Aufwärts- und Abwärtsbewegung des entsprechenden Rades relativ zu dem Fahrzeug-Fahrwerk zuläßt, wobei die obere Aufhängungs-Komponente (3) auf einer Seite des Fahrzeugs unabhängig von den unteren Aufhängungs-Komponenten (2, 6) mit der oberen Aufhängungskomponente (7) auf der anderen Seite des Fahrzeuges querverbunden ist, **dadurch gekennzeichnet, daß** die Querverbindungen jeweils durch eine diagonale mechanische Verbindung zwischen einem oberen Bereich der oberen Aufhängungs-Komponente (3) auf einer Seite und einem entsprechenden oberen Bereich der oberen Aufhängungs-Komponente (7) auf der anderen Seite über eine Verbindungsstange (10, 11) und eine versetzte Schwenkwellenanordnung (5, 9) vorgesehen sind, wobei zur zwangsläufigen Begrenzung der Rotationsebene eines jeden Rades in Richtung einer Orientierung, die senkrecht zur Straßenoberfläche verläuft, während das Fahrgestell in die Lage versetzt wird, sich vertikal zu bewegen und relativ zu den Rädern beim Kurvenfahren, beim Beschleunigen, beim Verzögern und bei Kombinationen dieser Bewegungen zu rollen, ein oberer Bereich eines jeden Rades seitlich so begrenzt wird, daß jedes entsprechende Rad in eine Position gezwungen wird, in der es im wesentlichen senkrecht zur Straßenoberfläche steht.

2. Fahrgestell für ein Motorfahrzeug nach Anspruch 1, bei dem eine Federeinheit (14, 14') so befestigt ist, daß sie zwischen dem Fahrgestell und dem oberen Ende einer jeden aufrecht stehenden Aufhängungsstütze (17, 17'), an der ein Rad befestigt ist, oder der zugeordneten oberen Aufhängungskomponente (3, 7) der Radaufhängung befestigt ist.

3. Motorfahrzeug-Fahrgestell nach Anspruch 2, bei dem jede Befestigungsstelle der Federeinheit ein Verschwenken zwischen dem Ende der Federeinheit und dem Fahrgestell am einen Ende sowie der Aufhängungsstütze oder dem oberen Arm am anderen Ende erzielt wird.

4. Motorfahrzeug-Fahrgestell nach Anspruch 3, bei dem die Federeinheit sich zwischen den beiden Befestigungsstellen in einem spitzen Winkel zur Vertikalen erstreckt.

5. Motorfahrzeug-Fahrgestell nach Anspruch 1, bei dem die eingeprägte Fähigkeit der Anordnung, das Ausmaß der Fahrzeugrollbewegung beim Kurvenfahren zu beeinflussen, durch Änderung der Hebelverhältnisse innerhalb des Systems und/oder des seitlichen Abstandes zwischen den Rad - Mittenlinien und den äußeren Schwenkstellen des gefederten Armes steuerbar ist.

6. Motorfahrzeug-Fahrwerk nach einem der Ansprüche 3 oder 4, bei dem die Fähigkeit der Anordnung zur Erzielung des Ausmaßes der Rollbewegung dadurch steuerbar ist, daß der Neigungswinkel zur Vertikalen der Drucklinien der Federeinheiten gesteuert wird.

7. Verfahren zum Einstellen des Ausmaßes der Rollbewegung beim Kurvenfahren eines Fahrzeuges mit einem Fahrgestell nach Anspruch 1, **dadurch gekennzeichnet, daß** die Hebelverhältnisse innerhalb des Systems und/oder des seitlichen Abstandes zwischen den Rad-Mittenlinien und den äußeren Schwenkstellen des gefederten Armes geändert werden.

8. Verfahren zum Einstellen des Ausmaßes der Rollbewegung beim Kurvenfahren eines Fahrzeuges mit einem Fahrgestell nach Anspruch 3 oder 4, **dadurch gekennzeichnet, daß** der Neigungswinkel zur Vertikalen der Drucklinien der Federeinheiten geändert wird

## Revendications

1. Structure de châssis de véhicule à moteur qui inclut un système de suspension indépendant incluant des composantes de suspension supérieure et inférieure gauche et droite (3, 7, 2, 6) pour les roues gauche et droite (4, 8) respectivement pour l'adhérence et la circulation le long de la surface d'une route, chacune desdites composantes de suspension étant agencée de manière à permettre un mouvement contenu montant/descendant de la roue respective par rapport à la structure de châssis du véhicule, dans laquelle la composante de suspension supérieure (3) sur un côté du véhicule fait l'objet d'une liaison croisée indépendante des composantes de suspension inférieures (1, 6) avec la composante de suspension supérieure (7) de l'autre côté du véhicule, **caractérisée en ce que** les liaisons croisées sont prévues chacune par une connexion mécanique diagonale entre une région supérieure de la composante de suspension supérieure (3) sur un côté et une région supérieure respective de la composante de suspension supérieure (7) de l'autre côté via une barre de connexion (10, 11) et un ensemble à arbre de pivotement déporté (5, 9), de manière à contenir ainsi le plan de rotation de chaque roue en direction d'une orientation perpendiculaire à la surface de la route tout en permettant à la structure de châssis de se déplacer verticalement et de rouler par rapport auxdites roues pendant les manoeuvres de stationnement, les accélérations, les décélérations, et les combinaisons de ces manoeuvres, et une région supérieure de chaque roue est contenue latéralement de telle manière que chaque roue respective est contenue dans une position dans laquelle elle est sensiblement perpendiculaire à la surface de la route.

2. Structure de châssis de véhicule à moteur selon la revendication 1, dans laquelle une unité à ressort (14, 14') est montée de manière à agir entre le châssis et soit l'extrémité supérieure de chaque montant de suspension (17, 17') sur lequel une roue est montée, soit sur la composante de suspension supérieure associée (3, 7) de la suspension de roue.

3. Structure de châssis de véhicule à moteur selon la revendication 2, dans laquelle chaque point d'attache de l'unité à ressort assure un pivotement entre l'extrémité de l'unité à ressort et le châssis à une extrémité, et le montant le bras supérieur de suspension à l'autre extrémité.

4. Structure de châssis de véhicule à moteur selon la revendication 3, dans laquelle l'unité à ressort s'étend entre ses deux points d'attache sous un angle aigu par rapport à la verticale.

5. Structure de châssis de véhicule à moteur selon la revendication 1, dans laquelle la capacité inhérente de l'agencement à affecter le degré de roulis du véhicule lors des manoeuvres de stationnement peut être commandée en modifiant les rapports de levier à l'intérieur du système et/ou la distance latérale entre les axes des roues et les pivots extérieurs des bras suspendus.

6. Structure de châssis de véhicule à moteur selon l'une ou l'autre des revendications 3 et 4, dans laquelle la capacité de l'agencement à affecter le degré de roulis est susceptible d'être commandée en modifiant l'angle d'inclinaison par rapport à verticale des lignes de poussée des unités à ressort.

7. Procédé pour ajuster le degré de roulis lors des manoeuvres de stationnement d'un véhicule qui incorpore une structure de châssis selon la revendication 1, comprenant l'étape consistant à modifier les rapports de levier à l'intérieur du système et/ou la distance latérale entre les axes des roues et les pivots extérieurs des bras suspendus.

8. Procédé pour ajuster le degré de roulis lors des manoeuvres de stationnement d'un véhicule incorporant une structure de châssis selon l'une ou l'autre des revendications 3 et 4, comprenant l'étape consistant à modifier l'angle d'inclinaison par rapport à la verticale des lignes de poussée des unités à ressort.
